# EUROPEAN PATENT APPLICATION

(11) **EP 1 930 353 A1**
(43) Date of publication of application: **11.06.2008**
(21) Application number: 06077187.0
(22) Date of filing: 07.12.2006
(51) Int. Cl.: C08F 297/02

(54) **Olefin copolymer, a process for preparing an olefin copolymer and the use of same**

(71) Applicant: Borealis Technology Oy, 06101 Porvoo (FI)
(72) Inventor: Follestad, Ariid, 3960 Stathelle (NO); Dahl, Ivar M., 0468 Oslo (NO); Blom, Richard, 0754 Oslo (NO)
(74) Representative: Prins, Hendrik Willem

(57) **Abstract**

The invention relates to an olefin copolymer comprising at least one type of olefin unit derived from at least one olefin monomer and at least one type of polyene unit derived from at least one polyene monomer, having an average molecular weight in the range of 300-10,000, to a process for preparing an olefin copolymer; and to its use.

## Description

The present invention relates to an olefin copolymer comprising on the one hand at least one type of olefin unit and on the other at least one type of a polyene unit, to a process of preparing such olefin copolymer and to particular uses of such olefin copolymer.

### I. Background to the invention

EP 667 359 relates to olefin copolymers and a process for producing same. The olefin copolymer is composed of olefin units and diolefin units, and has a weight-average molecular weight of 200 to 800,000.

WO 2005/005495 relates to an olefin polymerization process using a metallocene-based catalyst system. In the polymerization a further comonomer may be used, namely non-conjugated diolefins able to cyclo polymerization, and dienes capable of giving unsaturated monomeric units.

US 6,977,287 relates to propylene diene copolymers obtained by a copolymerization reaction of one or more olefins with alpha-omega-diene units.

EP 611 780 relates to a polyolefin containing an alpha-olefin/polyene copolymer. The copolymer is obtainable by copolymerization of an alpha-olefin and a polyene compound having 7 or more carbon atoms which has an olefinic double bond at both terminals.

EP 784 062 relates to a process for production of long-chain branched polyolefins using a metallocene polymerization and a hydrocarbon interlinking compound which is of the diene or naphthalene type.

It is noted that the molecular weight of polypropylene produced using Ziegler-Natta catalysts in absence of hydrogen is relatively low. Accordingly, there is a need for a tool for increasing the viscosity of polymer components intended for use as higher molecular weight fractions.

The ability of metallocene catalysts for producing high viscosity polymers is relatively low. Accordingly, there is a need for increasing the viscosity in polyolefins produced with metallocene catalysts. In particular for components of a final polypropylene product which comprises both a high fraction of propylene and a ethylene. For instance, the isotactic-polypropylene producing sites in metallocene catalysts provide lower viscosity ethylene-propylene copolymers in comparison to when these make both pure polypropylene and pure polyethylene. Again an olefin copolymer would be a tool in increasing the viscosity.

For particular applications multicomponent polyethylene Ziegler-Natta based compositions may have to contain a component with very high viscosity and high comonomer content. However, in absence of hydrogen, the melt viscosity of polyethylene copolymers made with Ziegler-Natta catalysts decreases much with an increasing amount of comonomer. Therefore, it may be very difficult to provide the polyethylene copolymer component with sufficiently high viscosity.

Finally, relatively high amounts of long chain branching may be found in low density polyethylene (LDPE). This LDPE is made by high pressure free radical processing and results in highly short chain branched and long chain branched polymers of rather uncontrolled structure. These polymers are limited to a very low density range and contain a relatively high proportion of methyl groups directly attached to the main chains, which form a type of short chain branches which are considered relatively ineffective in resisting stress crack failure. So there is a need for polymers that do not have these disadvantages. Accordingly, there is a need for polymers which after long chain branching will have a more controlled polymer structure such as a star-form or H-form.

### II. Summary of the invention

In view of the above mentioned drawbacks and needs the invention has for its object to provide novel olefin copolymers and a process using a polyene being a polymerization product of at least one diolefin. This polyene of the polymerized polymer/oligomer type comprises a high degree of unsaturation of the vinylic type. The novel olefin copolymers can be produced by any polymerization process using known coordination catalysts. A coordination catalyst comprises a transition metal as an active site for polymerising unsaturated compounds by addition polymerization. Examples of such catalysts are Ziegler-Natta based, metallocene-based and/or chromium oxide based catalysts. It has been shown that polymerization using such polyene provides an olefin copolymer with remarkable reduction in the melt flow rate. Furthermore, the high shear rate viscosity is reduced while the low shear rate viscosity is increased. The olefin copolymer functions as a rheology improver. Furthermore, the olefin copolymer is easily modified by downstream cross-linking using compounds generating radicals or using radiation generating radicals.

Accordingly, the present invention provides an olefin copolymer comprising:
at least one type of olefin unit derived from at least one olefin monomer; and
at least one type of polyene unit derived from at least one polyene monomer, having an average molecular weight in the range of 300-10,000.

The polyene has an average molecular weight in the range of 300-10,000. This range in molecular weight is selected such that the desired properties are obtained and the effect of possibly remaining unreacted polyene acceptable. Furthermore, at a given mass percentage of added polyene good effectiveness on product properties is obtained.

### III. Detailed description of the invention

The olefin copolymer provided by the invention comprises a relatively high concentration of vinylic double bonds. Accordingly, the olefin copolymer as such has the property of increasing surface adhesion. The olefin copolymer may be subjected to cross-linking thereby providing a polymer which may have a high to extremely high viscosity. Due to the long chain branching the polymer will have a high melt strength. The viscosity curve is changed so that at high shear rate a low viscosity is obtainable providing a low pressure drop in high shear processing dies. At the same time at low shear rate the viscosity is high providing good solid-state mechanical properties and good resistance to melt sagging.

The olefin copolymer may comprise one or various types of olefin units and/or polyene units depending on the desired properties. Each olefine unit may be derived from one or more olefin monomers. Also the polyene unit may be derived from the same or different polyene monomers. The polyene monomer is a copolymerisable monomer comprising more than one non-aromatic, vinylic carbon-carbon double bond. Selections can be made in view of the desired properties and/or subsequent processing or uses.

According to a preferred embodiment the polyene has an average molecular weight in the range of 500-5,000.

The range in average molecular weight is selected such that the polyene monomer has a low volatility resulting in low smell from residual polyene in the polymer and high effectiveness added as a given mass percentage.

The polyene monomer is having a vinyl unsaturation of at least 5% of its total number of double bonds.

The degree of vinyl unsaturation (CH₂=CH- vinylic groups) in the chain branches and in the main chain determine the degree and type of cross-linking and thereby the properties. The vinyl unsaturation is normally at least 15% and preferably at least 25% of the total number of double bonds. Dependent on the end properties of the olefin copolymer a variety of differences in vinyl unsaturation of the polyene monomer are suitable for use. It is noted that for instance 10% vinyl unsaturation corresponds to about 1 vinylic group per 40 carbon atoms of the polyene monomer. A higher content of vinyl unsaturation provides a higher relative reduction in melt flow rate.

Ideally, the vinyl unsaturation is 100%, implying that all carbon-carbon double bonds are of the vinylic type. Thereby achieving maximum incorporation in the polymer and maximum reincorporation into a second polymer chain to provide long chain branching. Practically the vinyl unsaturation is 10-60%.

The polyene monomer suitable for use according to the invention has preferably per monomer molecule at least 3 vinylic carbon-carbon double bonds, preferably at least 4, preferably at least 5 vinylic carbon-carbon double bonds, or more preferred vinylic carbon-carbon double bonds in the range of 3-15, preferably in the range of 5-10.

The olefin copolymer according to the invention has a melt flow rate MFR₂ (determined according to ISO 1133, condition D) of less than 5 gram per 10 minutes.

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190°C and may be determined at different loadings such as 2.16 kg (MFR₂), 5 kg (MFR₅) or 21.6 kg (MFR₂₁).

Olefin copolymers according to the present invention generally may have a MFR₂ in the range of 0.02 to 5 gram per 10 minutes.

Generally the olefin copolymers will have a particular weight average molecular weight M_{w} and number average molecular weight Mₙ. The weight average molecular weight M_{w} and the number average molecular weight Mₙ are measured by a method based on ISO 16014-4:2003. A Waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Houwink's constant K: 9.54*10-5 and a: 0.725 for PS, and K: 3.92*10-4 and a: 0.725 for PE). The ratio MWR of M_{w} over Mₙ is a measure of the broadness of the distribution, since M_{w} is primarily influenced by the high molecular weight end of the distribution, while Mₙ is primarily influenced by the low molecular weight end of the distribution.

Preferably the olefin copolymer according to the invention has a weight average molecular weight M_{w} from about 75,000 to 1,000,000. A higher weight average molecular weight M_{w} is beneficial for the properties. Properties that are improved with increasing Mw are rupture properties such as impact resistance and environmental stress crack resistance, as well as resistance towards melt sagging.

The molecular weight ratio MWR (M_{w}/Mₙ) is at least 4. The increase of the MWR shows that the molecular weight of the olefin copolymer is increasing while the number of olefin copolymers is decreasing. This shows that the polyene is incorporated within the copolymer chain and may be later reacted into a secondary polymer chain. In such secondary polymer chains, when creating long chain branching, most probably H-shaped molecules are obtained. These provide an increased MWR to the composition.

It is preferred that the polyene unit is derived from at least one polyene monomer which is precontacted with an alkyl or aryl metallic compound of groups IA, IIA, IIB and IIIA of the Periodic Table. Metals from the groups IA, IIA, IIB and IIIA comprise Li, Na, K, Mg, Zn, B and Al.

Polymerization results show that the activity of the coordination copolymerization catalyst is reduced upon the addition of the polyene particularly at relatively high vinylic unsaturation levels. This reduction of catalyst activity is strongly reduced when the polyene was precontacted. Preferably the polyene monomer is contacted with an alkyl aluminium, such as TMA, TEA, and/or an alumoxane, such as MAO, alkyl zinc, such as dialkyl zinc, and/or alkyl borane, such as trialkyl borane. The precontact with the alkyl or aryl metallic compound has a beneficial effect on the catalyst activity but no substantial effect on the molecular weight (distribution).

Generally the olefin copolymer may be produced using a polyene monomer which has a high degree of vinyl unsaturation. Suitable are poly(C4-C10) dienes. These may be produced by polymerization of the corresponding C4-C10 diene following traditional polymerization reactions using a number of known catalysts. Preferred is polybutadiene obtained by polymerisation of 1,3 butadiene. Obviously, mixtures of polyene monomers may be used. Use could be made of one type of polyene monomer, such as polybutadiene, having different fractions of the vinyl unsaturation and/or differences in molecular weight distributions. Preferred are polyenes based on non-expensive starting materials producible by standard polymerization techniques in commercial quantities.

The olefin monomer may be any known olefin monomer used in coordination polymerization and copolymerization. Such as C2-C20 alpha-olefins. Preferably C2-10 olefins, such as ethylene, propylene, 1-butene, 1-pentene, 1-hexene, 4-methyl-1-pentene, 1-heptene, 1-octene, 1-nonene and 1-decene as well as mixtures thereof. Most preferred are ethylene and propylene and mixtures of such olefin monomers. Most preferred is ethylene alone or together with at least one alpha olefin, e.g. 1-butene, 1-hexene and 1-octene, (most preferred 1-butene and 1-hexene) to give a polymer with at least 90 mole % ethylene units. Also preferred is propylene either alone or together with at least one of ethylene and 1-butene to give a polymer of at least 30 mole % propylene, preferably at least 90 mole % propylene Preferably the alpha olefin comonomer content is 0,01 - 8 mol%, more preferred 0,1 - 4 mol%, e.g. 1-3 mol%.

Another aspect of the invention relates to a process for preparing an olefin copolymer comprising the steps of:
i. providing at least one olefin monomer;
ii. providing at least one polyene monomer having an average molecular weight in the range of 300-10,000; and
iii. copolymerising the olefin monomer and the polyene monomer in the presence of a coordination polymerisation catalyst.

Using this process according to the invention it is possible to produce polyolefins containing a relatively high concentration of vinylic double bonds. These olefin copolymers may be used as such or subjected to chemical reactions like cross-linking.

As coordination polymerization catalyst a Ziegler-Natta catalyst, metallocene-based catalyst or chromium based catalyst may be used. According to one embodiment a Ziegler-Natta catalyst is preferred. According to another embodiment metallocene-based catalyst is preferred.

### III.a Ziegler-Natta catalyst

The Ziegler-Natta catalyst may contain a magnesium compound, an aluminium compound and a titanium or zirconium compound supported on a particulate support.

The particulate support can be an inorganic oxide support, such as silica, alumina, titania, silica-alumina and silica-titania. Alternatively, it can be a metal halide, such as calcium chloride or magnesium chloride or magnesium hydroxychloride. Preferably, the support is silica or magnesium chloride. Most preferably, it is silica. The average particle size of the silica support can be typically from 10 to 100 µm.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium or zirconium compound is a halogen containing titanium or zirconium compound, preferably chlorine containing titanium compound. Especially preferred titanium compound is titanium tetrachloride.

The catalyst can be prepared by sequentially contacting the carrier with the above mentioned compounds, as described in EP-A-688794. Alternatively, it can be prepared by first preparing a solution from the components and then contacting the solution with a carrier, as described in WO-A-01/55230.

The above mentioned solid catalyst component may be contacted with an aluminium alkyl cocatalyst, which preferably is an aluminium trialkyl compound, after which it can be used in polymerisation. The contacting of the solid catalyst component and the aluminium alkyl cocatalyst can either be conducted prior to introducing the catalyst into the polymerisation reactor, or it can be conducted by introducing the two components separately into the polymerisation reactor, as described in EP 1,378,528. In the precontacted solid catalyst the amount of impregnated cocatalyst is from about 2wt%.

### III.b Metallocene-based catalyst

Metallocene-based catalysts comprise active sites having a 5-ring directly attached to a transition metal, η bonded. For example, a metallocene-based catalyst comprises generally compounds represented by the formula LₘRₙMX_{q} wherein M is a transition metal of group 3 to 10 of the periodic table (IUPAC), or of an actinide or lantanide, each X is independently a monovalent anionic ligand, such as σ-ligand, each L is independently an organic ligand which coordinates to M, R is a bridging group linking two ligands L, m is 1, 2 or 3, n is 0 or 1, q is 1,2 or 3, and the sum of m+q is equal to the valency of the metal. Furthermore,ligands X can be mutually bridged and ligand X can be bridged with ligand L.

Where a metallocene catalyst is used, the preparation of the metallocenes can be carried out according or analogously to the methods known from the literature and is within skills of a person skilled in the field. Thus for the preparation see e.g. EP-A-129 368, examples of compounds wherein the metal atom bears a -NR" 2 ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

Suitable metallocenes are,
Dimethylsilanylbis (2-methyl-4-phenyl-1-indenyl)ZrCl₂;
Dimethylsilanylbis (2-methyl-4,6-diisopropylindenyl)ZrCl₂;
Dimethylsilanylbis (2-ethyl-4-phenyl-1-indenyl)ZrCl₂;
Dimethylsilanylbis (2-ethyl-4-naphthyl-1-indenyl)ZrCl₂;
Phenyl(Methyl)silanylbis(2-methyl-4-phenyl-1-indenyl)ZrCl₂;
Dimethylsilanylbis(2-methyl-4-(1-naphthyl)-1-indenyl)ZrCl₂;
Dimethylsilanylbis(2-methyl-4-(2-naphthyl)-1-indenyl) ZrCl₂;
Dimethylsilanylbis(2-methyl-indenyl)ZrCl₂;
Dimethylsilanylbis(2-methyl-4,5-diisopropyl-1-indenyl) ZrCl₂;
Dimethylsilanylbis(2,4,6-trimethyl-1-indenyl)ZrCl₂;
Phenyl(Methyl)silanylbis(2-methyl-4,6-diisopropyl-1-indenyl)ZrCl₂;
1,2-Ethandiylbis(2-methyl-4,6-diisopropyl-1-indenyl) ZrCl₂;
1,2-Butandiylbis(2-methyl-4,6-diisopropyl-1-indenyl)
Dimethylsilanylbis(2-methyl-4-ethyl-1-indenyl)ZrCl₂;
Dimethylsilanylbis(2-methyl-4-isopropyl-1-indenyl)ZrCl₂;
Dimethylsilanylbis(2-methyl-4-t-butyl-1-indenyl)ZrCl₂; Phenyl(Methyl)silanylbis(2-methyl-4-isopropyl-1-indenyl) ZrCl₂;
Dimethylsilanylbis(2-ethyl-4-methyl-1-indenyl)ZrCl₂;
Dimethylsilanylbis(2,4-dimethyl-1-indenyl)ZrCl₂;
Dimethylsilanylbis(2-methyl-4-ethyl-1-indenyl)ZrCl₂;
Dimethylsilanylbis(2-methyl-1-indenyl)ZrCl₂;

Metallocenes are generally used in combination with some form of activator. Alkylalumoxanes may be used as activators, most desirably methylalumoxane (MAO).

Activators may also include those comprising or capable of forming non-coordinating anions along with catalytically active metallocene cations. Compounds or complexes of fluoro aryl-substituted boron and aluminium are particularly suitable, see, e.g., US patents 5,198,401; 5,278,119; and 5,643,847.

The metallocene-based catalyst may be supported using a porous particulate material, such as for example, clay, talc, inorganic oxides, inorganic chlorides and resinous materials such as polyolefin or polymeric compounds.

Desirably, the support materials are porous inorganic oxide materials. Silica, alumina, silica-alumina, and mixtures thereof are particularly desirable. Other inorganic oxides that may be employed either alone or in combination with the silica, alumina or silica-alumina are magnesia, titania, zirconia, and the like. A particularly desirable support material is particulate silicon dioxide.

The supported metallocene-based catalyst may be used directly in polymerization or the catalyst composition may be prepolymerized using methods well known in the art. For details regarding prepolymerization, see U.S. Patent Nos. 4,923,833; 4,921,825; and 5,643,847; and EP 279 863 and EP 345 893.

In this respect it is noted that the ability of metallocene-based catalysts in producing high viscosity polymers is less than that ability of a Ziegler-Natta catalysts. However, using polyenes according to the invention in the copolymerization will result in olefin copolymers having an increased viscosity and an increased melt flow rate.

### III.c Catalyst prehandling

It is preferred that the coordination polymerisation catalyst is prereacted with the polyene monomer prior to the copolymerization with the olefin monomer. Due to prereacting the polyene monomer with the coordination polymerization catalyst the number of polyene monomers incorporated in the copolymer chain will be higher.

According to another preferred embodiment the polymerisation catalyst is activated by impregnation with cocatalyst, such as an alumoxane and/or an alkyl aluminium. This secures that the cocatalyst is exactly where it is needed. This further may be used to simplify the feeding systems to the polymeriation reactor, using less equipment, e.g. when having only one catalytic component instead of two. Alternatively, present complex equipment could be used for feeding other adjuvants of interest - like polyenes etc. Further, it may avoid the use of the spontaneously inflammable metal alkyl liquids. In addition, for gas phase reactors, the ratio between the cocatalyst and the transition metal can be kept substantially constant within each polymer particle. Because separately added cocatalyst maynot distribute properly since small polymer particles will catch relatively more cocatalyst on a weight fraction basis than does large polymer particles.

An olefin copolymerisation catalyst prepared by impregnating a solid particulate Ziegler Natta polymerisation catalyst component with a cocatalyst and recovering the solid activated catalyst. The solid catalyst is suitably impregnated with from about 2wt% cocatalyst. Preferably the solid activated catalyst does not contain metallocene. Preferably the molar ratio between the metal in the cocatalyst and the transition metal in the solid particulate Ziegler Natta polymerisation catalyst is larger than 10 mol/mol.

### III.d Polymerization

Polymers, in particular multimodal polymers, for use in the invention may be prepared, for example, by two or more stage polymerisation or by the use of two or more different polymerisation catalysts and/or by the use of different polymerisation conditions in a one stage polymerisation. In principle any polymerisation method including solution, slurry and gas phase polymerisation can be used for producing polymers. The temperature in the polymerisation reactor needs to be sufficiently high to reach an acceptable activity of the catalyst. On the other hand, the temperature should not exceed the softening temperature of the polymer.

Preferably, however, the polymers are produced in a two or three stage polymerisation. Suitable polymerisation processes include liquid phase polymerisation, e.g. solution or slurry polymerization, preferably in the presence of a diluent (or optionally carried out in bulk), or gas phase polymerisation. Preferably the polymerisation involves at least one slurry polymerisation (e.g. in a loop reactor).

The polymers may comprise a low molecular weight (LMW) component and a high molecular weight (HMW) component.

In one preferable embodiment one of the above mentioned LMW and HMW components is polymerised as a slurry polymerisation (e.g. in a slurry tank or loop reactor) and the other as a gas phase polymerisation (e.g. in a gas reactor), in any order.

The polymers for use in the present invention are preferably produced in such a reactor system. Particularly preferably the polymer is formed at least in a two stage process comprising a slurry loop polymerisation followed by a gas phase polymerization. A preferred loop reactor-gas phase reactor system usable in this invention is generally known as BORSTAR^{®} reactor system. The multistage polymerization is preferably carried out using the same Ziegler-Natta catalyst system in each stage. Moreover, the LMW component is preferably polymerised in the slurry reactor, preferably in a loop reactor, and the HMW component in the gas phase reactor in the presence of the reaction product of the slurry reactor.

The conditions used in such processes are well known. For slurry reactors, the reaction temperature will generally be in the range 60 to 110 °C (e.g. 85-110 °C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100 °C. Preferred diluents include hydrocarbons such as propane or isobutane. Hydrogen is also preferably fed into the reactor to function as a molecular weight regulator.

If gas phase reactions are employed then conditions are preferably as follows:
- the temperature is within the range of 50°C to 130°C, preferably between 60°C and 115 °C,
- the pressure is within the range of 10 bar to 60 bar, preferably between 10 bar to 40 bar,
- hydrogen can be added for controlling the molar mass in a manner known per se,
- the residence time is typically 1 to 8 hours.

The gas used will commonly be a non-reactive gas such as nitrogen or low boiling point hydrocarbons such as propane together with monomer (e.g. ethylene). If desired, the polymerisation may be effected in a known manner under supercritical conditions in the slurry, preferably loop reactor, and/or as a condensed mode in the gas phase reactor.

The gas phase polymerisation may be conducted in a manner known in the art, such as in a bed fluidised by gas feed or in mechanically agitated bed. Also fast fluidisation may be utilised.

Preferably, the lower molecular weight polymer component is produced in a continuously operating loop reactor where ethylene is polymerised in the presence of a polymerisation catalyst as stated below and a chain transfer agent such as hydrogen. The diluent is typically an inert aliphatic hydrocarbon, preferably isobutane or propane.

The higher molecular weight component can then be formed in a gas phase reactor, preferably using the same catalyst.

The multistage process wherein the LMW component as defined above is produced in a slurry process and the HMW component is produced in a gas phase reactor in the presence of the LMW component of the previous step, results in a particularly preferable combination. By producing said HMW copolymer component in a gas phase process provides a further contribution to the good barrier properties of the composition of the invention. The high density polyethylenes of the invention are manufactured using well known polymerisation catalysts e.g. as described in numerous earlier patent applications.

In any multimodal polymer (olefin copolymer, polyene monomer and prepolymerized olefin monomer) suitable within the scope of the present invention, there is by definition a lower molecular weight component (LMW) and a higher molecular weight component (HMW).

Preferably, in the polymers of the invention at least one of the LMW and HMW fractions is a copolymer of ethylene. Further preferably, one of LMW and HMW is a homopolymer. Ideally, the lower molecular weight (LMW) component may be a copolymer of ethylene and polybutadiene or an ethylene homopolymer, more preferably a homopolymer. The higher molecular weight (HMW) component is preferably a copolymer.

The term "copolymer" as used herein is intended to encompass polymers comprising repeat units deriving from one monomer and at least one other monomer. In typical copolymers at least 0.25 mol-%, preferably at least 0.5 mol-%, e.g. at least 1-mol%, such as up to 10 mol-% of repeat units derive from the comonomer. In contrast the term " homopolymer" as used herein is intended to encompass polymers which consist essentially of repeat units deriving from one monomer. Homopolymers may, for example, comprise at least 99.8 %, preferably at least 99.9 %, by weight of repeat units deriving from the monomer.

According to another preferred embodiment the copolymerisation step iii) is carried out in the gas phase. Carrying out the polyene copolymerization step in total or in part in the gas phase is preferred for incorporating the desired amount of polyene in the copolymer. For reasons that in slurry or bulk polymerization a relatively large amount of polyene is to be present in the liquid phase such that the desired concentration will be present at the active sites of the coordination copolymerization catalyst. In gas phase polymerization the polyene which is less to not volatile would be concentrated on the catalyst particle or in the polymer phase thereby creating a high concentration.

As indicated above it is preferred that the polymerisation is carried out in at least two reactor zones and/or in at least two reactors. Accordingly, it is possible to produce a bimodal olefin copolymer. In a first reaction zone or first reactor a homopolymerization may be carried out producing low molecular weight polymer which is subsequently in another reactor zone or second reactor subjected to the copolymerization (using the polyene according to the invention) for producing high molecular weight copolymer part. This bimodal olefin copolymer has tailored and optimal mechanical properties and extrusion properties.

According to a preferred embodiment the polyene monomer is added to at least one of the reactor zones and/or to at least one of the reactors, preferably to the last reactor zone and/or reactor. Accordingly, if the polymerization is carried out in several stages in at least two reactor zones and/or in at least two reactors, the polyene monomer could be added to at least one of these reactor zones and/or reactors. For instance, if the polymerization process comprises a liquid polymerization and a gas phase polymerization then it is preferred to add the polyene monomer to the gas phase polymerization. In this gas phase polymerization is typically made a high molecular weight copolymer of for instance ethylene, butane or hexene. Addition of the polyene monomer would result in a production of a copolymer (at least a terpolymer) comprising ethylene, longer alpha olefin (s) and the olefin monomer. If the polymerization comprises a prepolymerization then (a part of) polyene monomer could be added to this prepolymerization step. Unconverted polyene monomer could pass through the other reactor zones and/or reactors. Preferably, for producing typically high molecular weight copolymer the (major part of) polyene monomer is added to the last reactor zone and/or reactor which is preferably carried out in the gas phase.

Finally, another aspect of the present invention relates to the use of olefin copolymers. These olefin copolymers may be used for pipe applications, in particular for thick pipe applications having diameters larger than 0.5 meters, such as from 0.5 to 3 meters. Other applications relate to blow moulding articles, such as containers having a content up to about 400 litres, such as from 5 to 400 litres. Another use relates to foamed articles such as foamed mats and foamed packaging material. Another use relates to cable applications. All these applications are based on the increased melt strength and/or the resistance to sagging, respectively. Furthermore, it is noted that the presence of residual double bonds at the surface of a product produced from the olefin copolymers according to the invention results in an increase of surface adhesion which is beneficial for printability and paintability.

Mentioned and other features and characteristics of the olefin copolymer, the process of preparing it and of its uses will be apparent from the following description which is given for information purposes and not intended to restrict the invention accordingly.

In this respect reference is made to:
figure 1 showing the effect of the catalyst activity on the amount of polybutadiene added; and
figure 2 shows the effect of the addition of various polyenes according to the invention on the melt flow rate.

### Example

Polybutadiene was used as a the polyene monomer for providing the polyene unit in the copolymerization with as the olefin unit ethylene. Polybutadiene can be readily polymerised from 1,3-butadiene by a number of catalysts (see Kirk-Othmer Encyclopedia of Chemical Technology 3.rd edition, volume 8, page 546 - 567.) It can be produced with a rather high fraction of unsaturation as vinyl groups. It also can be produced with rather narrow molecular weight distribution.

Three different types of polybutadiene have been used.
- Polybutadiene A: 20 wt% Polybutadiene in toluene (Aldrich, phenylterminated, average MW= 1300, d= 0.890, unsaturation, 45% vinyl, 35% trans-1,4)
- Polybutadiene B: 20 wt% Polybutadiene in toluene (Aldrich, phenylterminated, average MW= 1500, d= 0.890, unsaturation, 25% vinyl, 45% trans-1,4, 25% cis-1,4)
- Polybutadiene A-TMA: 20 wt% Polybutadiene in toluene + 2.5 vol% TMA (trimethylaluminium) (Polybutadiene: Aldrich, phenylterminated, average MW= 1300, d= 0.890 g/ml, unsaturation, 45% vinyl, 35% trans-1,4)

Before use the polybutadienes were degassed several times before preparing the solutions for the polymerization.

The catalysts were prepared as follows:

The nonactivated Ziegler catalyst (Ti/SiO2) was made similar to the description in example 1 in Borealis' EP 1378528.

To 2.0 g of this nonactivated Ziegler was added 2.5 ml of a solution of 30 w% MAO in toluene from Albemarle and in addition 2.5 ml neat toluene to make a slurry. The slurry was stirred for 1 hr., then dried at 50°C in argon flow. This catalyst is the activated Ziegler catalyst.

Polymerisations were carried out by using the activated Ziegler catalyst.

Polymerization was carried out in a 1 litre reactor fitted with a stirrer. Catalyst and optional polybutadiene solution was added and the reactor pressurised with hydrogen to 4 bar. 0.5 litre isobutane was added to the reactor. The temperature in the reactor was adjusted to 94°C and ethylene was added through a pressure control valve set at the 38 bar (polymerization pressure). After 20 minutes, the polymerization was stopped by venting off the overpressure in the reactor.

**Table : Results from slurry copolymerisations of ethylene and polybutadiene.**

| New number | Polybutadiene | Polyene amount | Catalyst | Activity | MFR2 | M_{w} | Mₙ | M_{w}/ Mₙ |
|---|---|---|---|---|---|---|---|---|
| | | ml | mg | gPE/ g cat,hr | g/10 min | g/mol | g/mol | - |
| 1 | - | 0 | 25 | 3888 | 16,40 | 66 000 | 11 000 | 6,0 |
| 2 | A | 5 | 32 | 122 | - | | | |
| 3 | B | 2 | 55 | 2706 | 2,19 | 115 000 | 22 000 | 5,2 |
| 4 | A | 0,5 | 41 | 2290 | 0,80 | 155 000 | 18 000 | 8,6 |
| 5 | A | 1 | 62 | 677 | 0,87 | 160 000 | 17 000 | 9,4 |
| 6 | A | 2 | 61 | 482 | 0,54 | 205 000 | 10 000 | 20,5 |
| 7 | A-TMA | 1 | 37 | 2651 | - | | | |
| 8 | A-TMA | 3 | 32 | 5081 | - | | | |
| 9 | A-TMA | 6 | 30 | 5090 | - | | | |
| 10 | A-TMA | 10 | 32 | 4781 | - | | | |

The results show that the copolymerization of ethylene and polybutadiene resulted in a decrease of the melt flow rate. The weight average molecular weight M_{w} increases. Also the molecular weight ratio MWR increases.

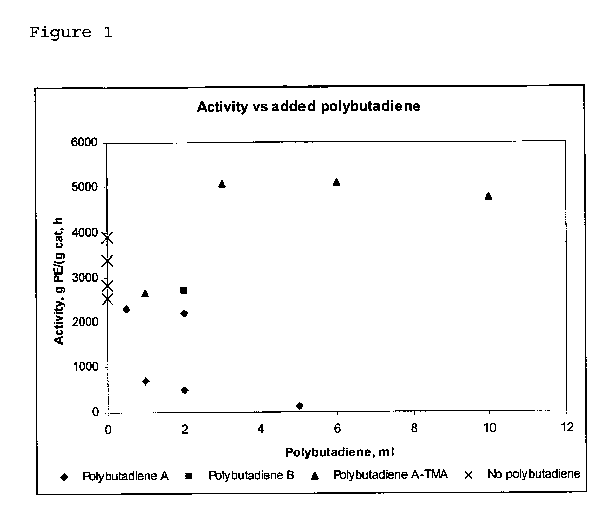

It is apparent from the results that the use of polybutadiene resulted in a decrease of the catalyst activity. However, such reduction in catalyst activity is overcome by using polybutadiene precontacted with trimethyl aluminium (polybutadiene A-TMA). See in this respect figure 1. Figure 1 shows that actually the catalyst activity is increased relative to ethylene polymerization without polybutadiene.

Finally, it is noted that due to the copolymerization with polybutadiene, the density of the produced olefin copolymer is reduced (from 966 g/dm3 to 958 g/dm3 indicating a lower degree of crystallinity in the polymerization end product.

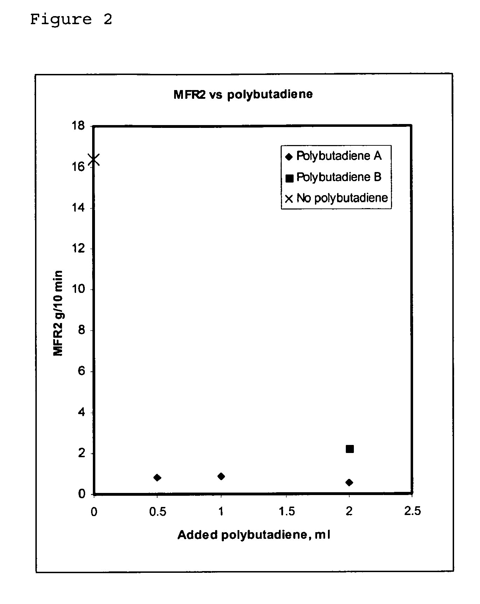

Figure 2 shows that the melt flow rate of the olefin copolymer is reduced due to the copolymerization with polybutadiene. The reduction in activity is higher for the polybutadiene A having a higher vinyl unsaturation relative to the total number of carbon-carbon double bonds (vinyl unsaturation 45%) than polybutadiene B (vinyl unsaturation 25%).

The decrease in melt flow rate indicates that long chain branching has taken place. The polybutadiene molecules have first been incorporated as a polyene unit in one polyethylene chain during the course of polymerization. Subsequently, reaction took place with a second polymer chain thereby creating long chain branching (probably into H-shaped polymerization product chains). In this respect reference is made to the increased molecular weight ratio showing that the molecular weight distribution is broadened by the copolymerization with polybutadiene.

It is noted that in the copolymerization a relatively high amount of hydrogen gas is used (4 bar). Copolymerizations at lower hydrogen concentrations (such as by a factor of 2) will result in an increase of the weight average molecular weight. Such increase of the molecular weight is relatively large when polymer chains with a given frequency of polyene units incorporated are long, when the polymer chains are short each chain has totally much fewer polyenes incorporated. to a weight average molecular weight of 1,000,000 and a decrease in number average molecular weight to 4,000. The molecular weight ratio may be increased up to 250. Expectedly the melt flow rate will then be as low as 0.02 gram/10 minutes.

## Claims

1. Olefin copolymer comprising:
at least one type of olefin unit derived from at least one olefin monomer; and
at least one type of polyene unit derived from at least one polyene monomer, having an average molecular weight in the range of 300-10,000.

2. Olefin copolymer as claimed in claim 1, wherein the polyene monomer has an average molecular weight in the range of 500-5,000.

3. Olefin copolymer according to claim 1 or 2, wherein the polyene monomer is having a vinyl unsaturation of at least 5% of its total number of double bonds.

4. Olefin according to claim 3, wherein the polyene monomer has a vinyl unsaturation of at least 15%, preferably at least 25% of its total number of double bonds.

5. Olefin copolymer according to any of the claims 3 or 4, wherein the polyene monomer has a vinyl unsaturation in the range of 5-100%, preferably 10-60%, more preferably 15-50%, such as 20-50% of its total number of double bonds.

6. Olefin copolymer according to any of the claims 1-5, wherein the polyene monomer has at least 3 vinylic carbon-carbon double bonds, preferably at least 4, preferably at least 5 vinylic carbon-carbon double bonds.

7. Olefin copolymer according to claim 6, wherein the polyene monomer has vinylic carbon-carbon double bonds in the range of 3-15, preferably in the range of 5-10.

8. Olefin copolymer, according to any of the claims 1-7, having a melt flow rate MFR₂ (determined according to ISO 1133, condition D) of less than 5g/10min, preferably less than 4g/10min, more preferably less than 1g/10min.

9. Olefin copolymer according to any of the claims 1-8, wherein the MFR₂ is in the range of 0.02 to 5g/10min, preferably in the range of 0.05 to 4g/10min, more preferably in the range of 0.5 to 1g/10min.

10. Olefin copolymer according to any of the claims 1-9, having a weight average molecular weight M_{w} of 75,000-1,000,000, preferably 100,000-500,000.

11. Olefin copolymer according to claim 9, having a molecular weight ratio (MWR) of the weight average molecular weight M_{w} over the number average molecular weight Mₙ being (M_{w}/Mₙ) of at least 4, preferably of at least 6, more preferably of at least 10.

12. Olefin copolymer according to claim 10 or 11 having a molecular weight ratio M_{w}/Mₙ in the range of 4-250, preferably in the range of 6-100.

13. Olefin copolymer according to any of the claims wherein the polyene unit is derived from at least one polyene monomer which is precontacted with an alkyl or aryl metallic compound of groups IA, IIA, IIB and IIIA of the Periodic Table.

14. Olefin copolymer according to claim 13, wherein the polyene monomer is precontacted with an metallic compound of the groups IIB and IIIA of the Periodic Table, such as an alkyl aluminium, such as TMA, TEA, an alumoxane, such as MAO, alkyl zinc, such as dialkyl zinc, and/or alkyl borane, such as trialkyl borane.

15. Olefin copolymer according to any of the claims 1-14, wherein the polyene monomer is a poly(C4-C10)diene, preferably polybutadiene, and/or mixtures thereof.

16. Olefin copolymer according to any of the claims 1-15, wherein the olefin monomer is ethylene or (C3-C20)-alpha-olefin, preferably ethylene or propylene and mixtures thereof.

17. Process for preparing an olefin copolymer comprising the steps of:
i. providing at least one olefin monomer;
ii. providing at least one polyene monomer having an average molecular weight in the range of 300-10,000; and
iii. polymerising the olefin monomer and the polyene monomer in the presence of a coordination copolymerisation catalyst.

18. Process according to claim 17, wherein olefin copolymer as claimed in claim 1, wherein the polyene monomer has an average molecular weight in the range of 500-5,000.

19. Process according to claim 17 or 18, wherein the polyene monomer is having a vinyl unsaturation of at least 5% of its total number of double bonds.

20. Process according to claim 19, wherein the polyene monomer has a vinyl unsaturation of at least 15%, preferably at least 25% of its total number of double bonds.

21. Process according to any of the claims 17-20, wherein the coordination polymerisation catalyst is a Ziegler-Natta catalyst or a metallocene-based catalyst.

22. Process according to claim 17 or 21, wherein the coordination polymerisation catalyst is prereacted with the polyene monomer prior to the polymerization with the olefin monomer.

23. Process according to any of the claims 17-22, wherein the polymerisation catalyst is activated by impregnation with cocatalyst, such as an alumoxane and/or an alkyl aluminium, preferably in an amount as from about 2wt%.

24. Process according to any of the claims 17-23, wherein the polymerisation is carried out in at least two reactor zones and/or in at least two reactors.

25. Process according to claim 24, wherein the polyene monomer is added to at least one of the reactor zones and/or at least one of the reactors, preferably to the last reactor zone and/or last reactor.

26. Process according to any of the claims 17-25, wherein at least part of the polymerisation step iii) optionally in the last reactor zone and/or last reactor is carried out in the gas phase.

27. Olefin copolymer obtainable with the process according to any of the claims 17-26.

28. Use of a olefin copolymer according to any of the claims 1-16 or 27 in pipe applications, in blow moulding, in forming foamed products, and/or cable applications.
